# EUROPEAN PATENT SPECIFICATION

(11) **EP 1 631 018 B1**
(45) Date of publication and mention of the grant of the patent: **17.10.2007**
(21) Application number: 05018570.1
(22) Date of filing: 26.08.2005
(51) Int. Cl.: H04L 12/56, H04L 12/28, H04Q 7/38

(54) **Random access method in multicell OFDMA networks**
Zufallzugriffsverfahren in mehrzelligen OFDMA Netzwerke
Procédé d'accès aléatoire dans un réseau multicellulaire OFDMA

(30) Priority: 27.08.2004 KR 2004068151
(43) Date of publication of application: 01.03.2006
(73) Proprietor: Samsung Electronics Co., Ltd., Yeongtong-gu Suwon-si, Gyeonggi-do (KR); Seoul National University Industry Foundation, Seoul (KR)
(72) Inventor: Choi, Young-June, San 4-2, Bongcheon-dong Gwanak-gu Seoul (KR); Bahk, Sae-Woong, San 4-2, Bongcheon-dong Gwanak-gu Seoul (KR); Jun, Jung-Hyun, San 4-2, Bongcheon-dong Gwanak-gu Seoul (KR); Yun, Sang-Boh, Yeongtong-gu Suwon-si Gyeonggi-do (KR)
(74) Representative: Grünecker, Kinkeldey, Stockmair & Schwanhäusser Anwaltssozietät

(56) References cited:
- EP-A- 0 938 193
- EP-A- 0 994 604
- US-A1- 2001 038 619

## Description

The present invention relates generally to an upstream access method in an Orthogonal Frequency Division Multiple Access (OFDMA)-based mobile communication system, and in particular, to a random access method.

In a next-generation mobile communication system, high speed and high quality data transmission will be required in order to support various multimedia services having an enhanced quality. Recently, an Orthogonal Frequency Division Multiple Access (OFDMA) technique, which is one of the techniques that meets the requirement for high-speed and high-quality data transmission, has been developed.

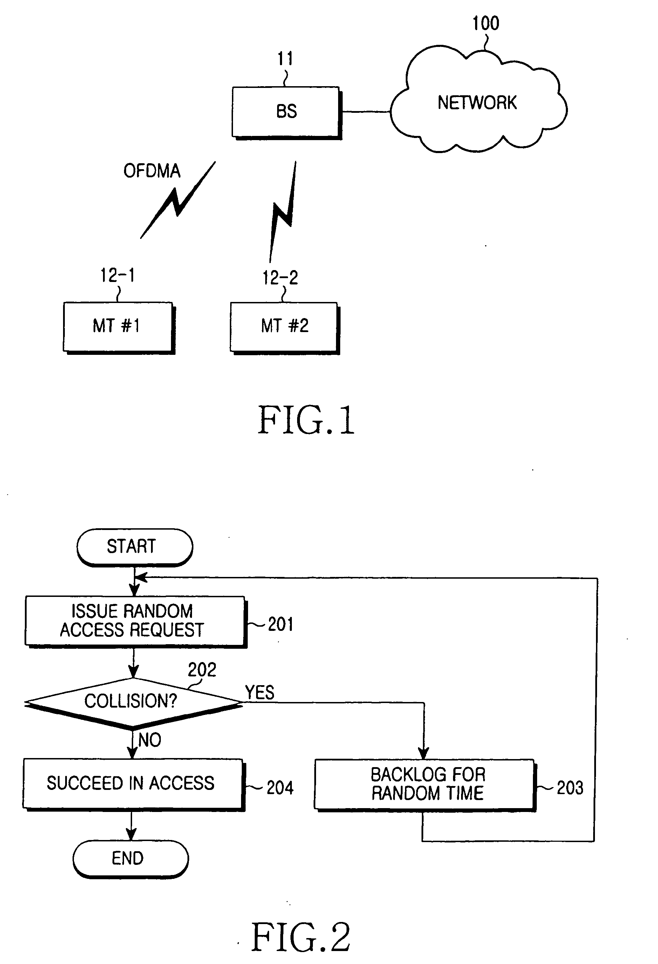

A block diagram illustrating a typical OFDMA communication system is shown in FIG 1. The OFDMA communication system has a multi-cell structure, comprised of a base station (BS) 11, a network 100 connected to the BS 11 to access Internet protocol (IP) networks (not shown), and a plurality of mobile terminals (MTs) 12-1 and 12-2 assigned to each BS 11.

An Orthogonal Frequency Division Multiplexing (OFDM)/OFDMA technique is used for signal transmission/reception between the BS 11 and the MTs 12-1 and 12-2 .

Moreover, when a plurality of subscriber devices (i.e., MTs) has access to the same BS, each subscriber device should use a random access channel of a random access method to initially access a network.

In wireless communication networks such as Wideband Code Division Multiple Access (W-CDMA), also, a random access method of an ALOHA system is used for an MT to access a BS in uplink. In addition, in these wireless communication networks, the random access method is used for all subscriber devices to access channels shared by cells. Besides, for a voice service, the random access method is used by each subscriber to request an independent channel allocation.

In next-generation mobile communication networks, which will include various data services, the random access method is well defined since there is a good possibility that it would be frequently used to apply a packet scheduling scheme to the uplink. However, sufficient studies of the random access method in next-generation mobile communication networks have not been performed as of yet.

One example of a deficiency of the random access method is that conventional technologies related to the random access method consider only a single channel of a single cell.

A flowchart illustrating a conventional random access method using a single channel is shown in FIG 2. In the conventional random access method, if a random access request is transmitted by each subscriber device in step 201, it is determined whether a collision has occurred in step 202.

As a result of the determination, if a collision has not occurred, the access is successfully achieved in step 204. However, if a collision has occurred, each collided subscriber device backlogs its random access request and waits for a random time in step 203, and attempts a new random access request in step 201.

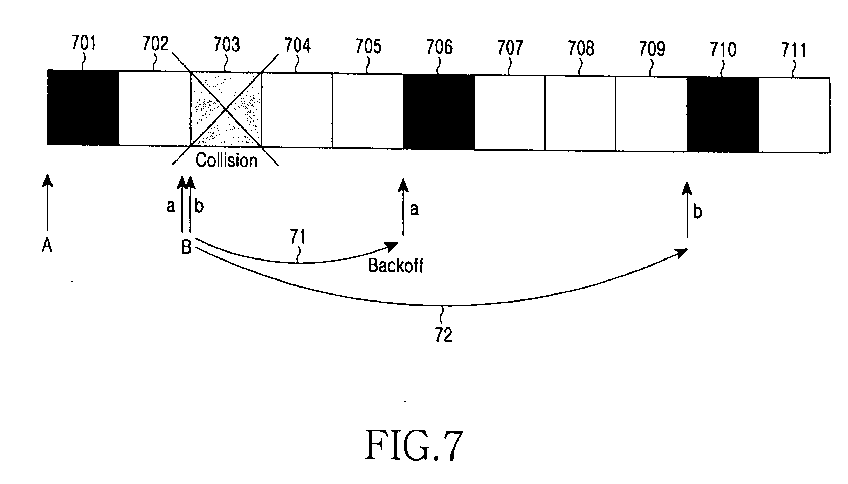

An illustrative diagram of the conventional random access method using a single channel is shown in FIG 7. As a common case, if a random access request "a" is transmitted by a subscriber device A, an uplink access can be achieved at a randomly requested slot 701. However, if random access requests "a" and "b" are simultaneously transmitted by two subscriber devices A and B respectively, and a collision occurs at a requested slot 703, the two subscriber devices A and B must then perform a backoff operation for random times 71 and 72 respectively. Thereafter, the two subscriber devices A and B must perform the uplink access at different slots 706 and 710, respectively, using new random access requests.

According to papers entitled "Throughput Analysis of Multichannel Slotted ALOHA Systems in Multiple Log-Normal and Rayleigh Interferers Environment" (VTC92) and "Multichannel ALOHA data Networks for Personal Communications Services" (Globecom 92), an access to multiple channels was assumed and analyzed. Thereafter, studies were made of combining coding techniques in multiple channels

However, in an OFDMA system using a plurality of subcarriers, although throughput of cells can be raised, a frequency reuse rate must be considered. Unfortunately, studies considering the frequency reuse rate have not been carried out. Accordingly, a study considering the frequency reuse rate of a random access method in an OFDMA system is desirable.

EP 0 938 193 A1 discloses a standard OFDM random access method, with a single channel that is accessed at the same time by a plurality of mobile stations. The uplink channel comprises a random access channel for the transmission of registration data from at least one mobile station to the base station.

It is the object of the present invention to provide a random access method in a multi-cell OFDMA network which can be efficiently used considering a frequency reuse rate in a network system having OFDMA-based multiple cells.

This object is solved by the subject matter of the independent claims.

Preferred embodiments are defined by the dependent claims.

An aspect of the present invention is to provide a random access method in a multi-cell OFDMA network which enables effective collision avoidance by obtaining an optimal value of the number of access retries for resource reuse of random access channels in a network system having OFDMA-based multiple cells.

According to one aspect of the present invention, there is provided a random access method in an Orthogonal Frequency Division Multiple Access (OFDMA) network, the method including the steps of (1) if a random access request to the OFDMA network is issued by each subscriber device, randomly selecting, by each subscriber device, one of uplink random access channels; (2) if no collision occurs in the selected channel, accessing through the selected channel; (3) if a collision occurs in the selected channel, and if the number of retries for channel selection is less than a predetermined value, randomly selecting one of the uplink random access channels and determining whether a collision occurs; (4) if no collision occurs as a result of the determination of step (3), accessing through a finally selected channel; and (5) if the collision occurs as the result of the determination of step (3), jumping to step (3).

The above object and other aspects, features and advantages of the present invention will become more apparent from the following detailed description when taken in conjunction with the accompanying drawings in which:
FIG. 1 is a schematic structural diagram of a typical OFDMA communication system; FIG. 2 is a flowchart illustrating a conventional random access method using a single channel; FIG. 3 is a flowchart illustrating a random access method in a multi-cell OFDMA network in which a reuse rate of multiple channels is considered according to a preferred embodiment of the present invention;
FIG. 4 is a flowchart illustrating a process of setting a retry number *m* applied to the random access method in the multi-cell OFDMA network according to the preferred embodiment of the present invention;
FIGs. 5A to 5C are illustrative diagrams of experimental results performed in a single cell based on the random access method in the multi-cell OFDMA network according to the preferred embodiment of the present invention;
FIGs. 6A and 6B are illustrative diagrams of experimental results performed in multiple cells based on the random access method in the multi-cell OFDMA network according to the preferred embodiment of the present invention;
FIG. 7 is an illustrative diagram of the conventional random access method using a single channel; and
FIG. 8 is an illustrative diagram of the random access method in which a reuse rate of multiple channels is considered according to the preferred embodiment of the present invention.

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

In the preferred embodiment of the present invention, it is assumed that the number of uplink random access channels of all cells is N.

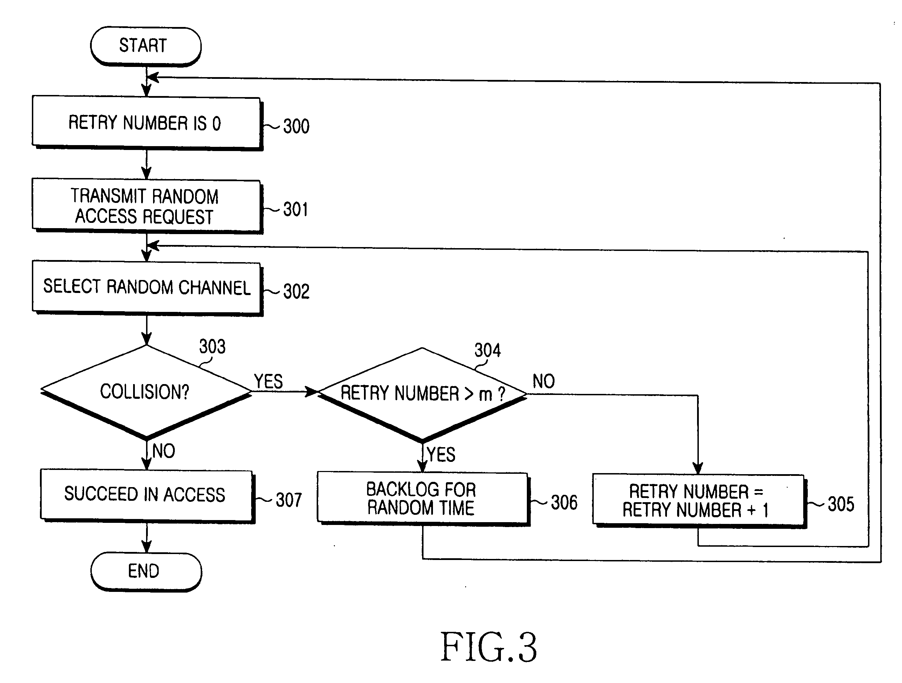

A flowchart illustrating a random access method in a multi-cell OFDMA network in which a reuse rate of multiple channels is considered according to a preferred embodiment of the present invention is shown in FIG 3.

Referring to FIG 3, according to the random access method of the present invention, a random access request retry number is set to 0 in step 301. A random access request is then transmitted by each subscriber device (i.e., an MT) in step 301, one of multiple channels is randomly selected by each MT,) in step 302. That is, as a result of multiple channels as opposed to a single channel, if two or more random access requests collide, because they were sent using the same time slot on the same channel, then each of the random access requests can be allocated to each of a plurality of random channels, thereby maximizing the probability of avoiding a collision by selecting and transmitting using the random channels, without requiring the operation of backlogging as is taught by the prior art.

Moreover, because multiple channels are randomly selected, the likelihood of a collision is reduced.

After a random channel is selected in step 302, it is determined whether a collision has occurred in the selected channel in step 303, and if a collision has not occurred, the access is successfully achieved in step 307.

As a result of the determination in step 303, if the collision occurs, it is determined whether the number of retries of each collided subscriber device is greater than a predetermined threshold " *m*" in step 304. If the number of retries is less than the predetermined threshold *m*, a retry number is increased (FIG 3 illustrates that "0" is given for an initial random access request retry.) in step 305, and thereafter the random channel selection procedure is repeated in step 302.

As a result of the determination in step 304, if the number of retries of each collided subscriber device is greater than the predetermined threshold *m*, the random access request of each corresponding subscriber device is backlogged for a random time in step 306, and a new random access request is transmitted in step 301.

In the above description, collisions are an indicative of a subscriber device's failure to access a random access channel because of a collision of its random access request with another subscriber station's random access message.

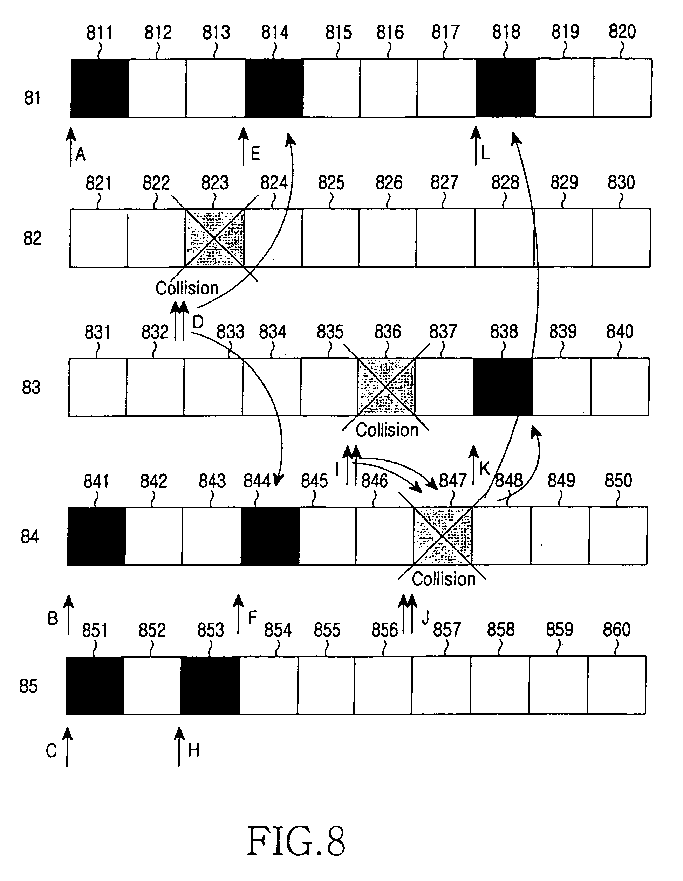

An illustrative diagram of the random access method using a reuse rate of multiple channels according to the preferred embodiment of the present invention is shown in FIG 8. Random access channels according to the preferred embodiment of the present invention include five channels 81, 82, 83, 84 and 85 including time slots 811 to 820, 821 to 830, 831 to 840, 841 to 850 and 851 to 860 on the same time axis, respectively.

If random access requests are transmitted by subscriber devices A, B and C, channels are randomly selected by the corresponding subscriber devices. That is, according to the illustrative diagram, the channel 81 is selected for subscriber device A, the channel 84 is selected for subscriber device B, and the channel 85 is selected for subscriber device C. Accordingly, uplink accesses of the subscriber devices can be achieved at randomly requested slots 811, 841 and 851, respectively.

However, when more than two subscriber devices issue random access requests and select random channels, a situation in which two subscriber devices D and M simultaneously select the same slot (e.g., slot 823) may occur. Likewise, when a plurality of subscriber devices simultaneously select the same slot of the same channel, unlike the prior art teaching of backlogging (i.e., waiting for random times, and again attempt random access requests), each collided subscriber device determines a next slot by randomly selecting a channel again. As a result, the collided subscriber devices (e.g. D and M) can successfully achieve uplink accessing slots 814 and 844, respectively.

In a case where a collision occurs between two subscriber devices I and J at slot 836, a random channel selection is performed, and if a collision again occurs at the slot 847, it is determined whether the number of random channel selections exceeds a predetermined retry number *m*, and if the number of random channel selections does not exceed the predetermined retry number *m*, a procedure in which each collided subscriber device (e.g., I and J) randomly selects a channel is repeated. As a result, the subscriber devices which collided at slots 836 and 847 successfully achieve uplink accesses at the slots 818 and 838.

Although subscriber devices I and J are shown to be repeatedly colliding, the second (i.e. repeated) collision can be between either I and/or J and other subscriber stations, in which case each subscriber device which has collided performs similar operations.

In a case where the number of random channel selections exceeds the predetermined retry number *m* because collisions repeatedly occur, each subscriber device backlogs, waits for a random time, and attempts a new random access request.

In the preferred embodiment of the present invention, it is assumed that the number of uplink random access channels of all cells is N. In addition, it is assumed that a reuse rate of the uplink random access channels of all cells is 1. That is, all subscriber devices perform transmission by randomly selecting one of the N channels in the uplink.

A value of the predetermined retry number *m* used in the preferred embodiment of the present invention is set by estimating a packet arrival rate of a network in a system to which the present invention is applied.

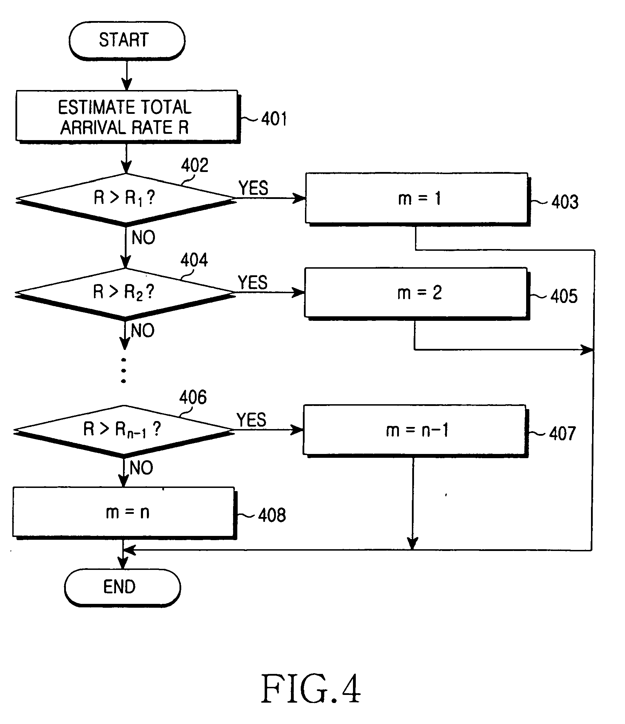

A flowchart illustrating a process of setting the retry number *m* applied to the random access method in the multi-cell OFDMA network according to the preferred embodiment of the present invention is shown in FIG 4. A value of the retry number *m* is set by estimating a packet total arrival rate R in a system to which the present invention is applied in step 401. The estimation of the total arrival rate R is performed by summing up a total number of random accesses attempted by all subscriber devices in one superframe and may be also performed by obtaining a mean value of a plurality of superframes.

The value of *m* is determined as 1 to n according to greatness or smallness between the total arrival rate R and R₁,R₂,...,Rₙ₋₁, which are values pre-calculated by analyses or experiments based on the total channel number N, in steps 402 to 408.

The values of *R*₁, *R*₂,...,*R*_{*n*-1} are assigned as values pre-calculated by analyses or experiments based on the total channel number N. The value of *n* can be arbitrarily set by the system.

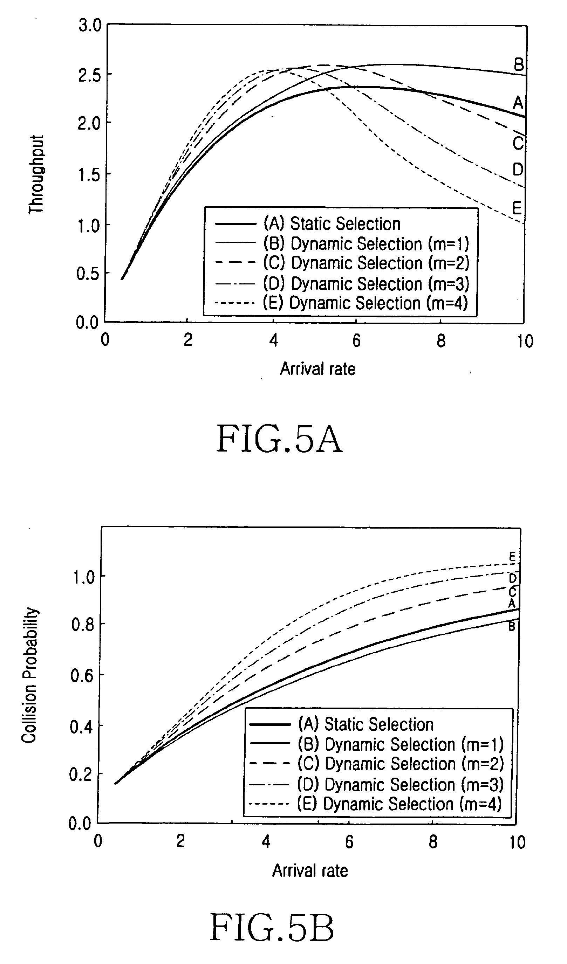

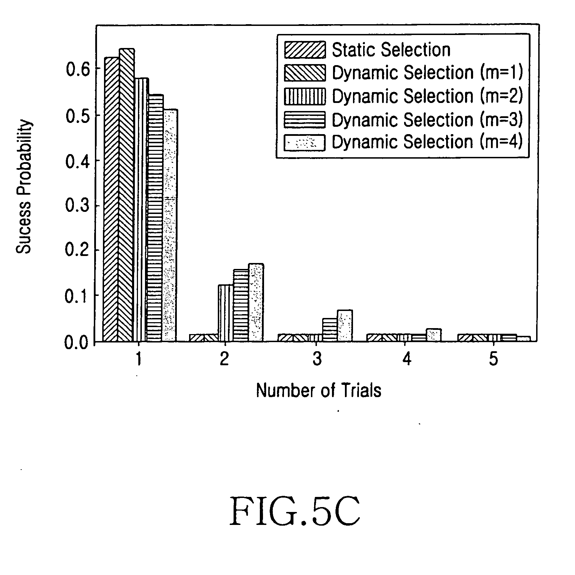

Illustrative diagrams of experimental results performed in a single cell based on the random access method in the multi-cell OFDMA network according to the preferred embodiment of the present invention are shown in FIGs. 5A and 5C.

An illustrative diagram of throughputs in a single cell to which the random access method in the multi-cell OFDMA network according to the preferred embodiment of the present invention is applied is shown in FIG 5A. An illustrative diagram of collision probabilities in a single cell to which the random access method in the multi-cell OFDMA network according to the preferred embodiment of the present invention is applied is shown in FIG 5B.

The horizontal axis of FIG 5A indicates an arrival rate, and the vertical axis indicates a throughput. The horizontal axis of FIG 5B indicates an arrival rate, and the vertical axis indicates a collision probability. FIGs. 5A and 5B show Poisson distribution charts in which total packets have arrival rates of 0 to 10 in a state of seven random access channels having different subcarriers in a single cell to which the random access method in a multi-cell OFDMA network according to the preferred embodiment of the present invention is applied.

Referring to FIGs. 5A and 5B, A indicates a case of static selection according to the conventional method in which every subscriber device can access only one random access channel assigned to each subscriber device, while B to E indicate cases of dynamic selection according to the preferred embodiment of the present invention in which every subscriber can randomly select one of random access channels.

Upon analysis of FIGs. 5A and 5B, it can also be recognized that the dynamic selection shows better performance than the static selection when *m* =1*.* It can also be recognized that the collision probability increases along with an increase of the *m* value while points indicating an optimal throughput separately exist based on the arrival rate.

That is, a case of *m* =4 has the best throughput at the arrival rate of 0 to 3.6, a case of *m* =3 has the best throughput at the arrival rate of 3.6 to 4.3, a case of *m* =2 has the best throughput at the arrival rate of 4.3 to 6, and a case of *m* =1 has the best throughput at the arrival rate of over 6.

FIG 5C is a comparative diagram of success probabilities based on the number of transmission trials in a single cell to which the random access method in the multi-cell OFDMA network according to the preferred embodiment of the present invention is applied. The horizontal axis of FIG 5C indicates the number of transmission trials, and the vertical axis indicates a success probability.

FIG 5C shows a comparison result of the success probabilities based on the number of transmission trials when a pack arrival rate is 2.625, and it can be recognized that the distribution changes according to a change of the *m* value.

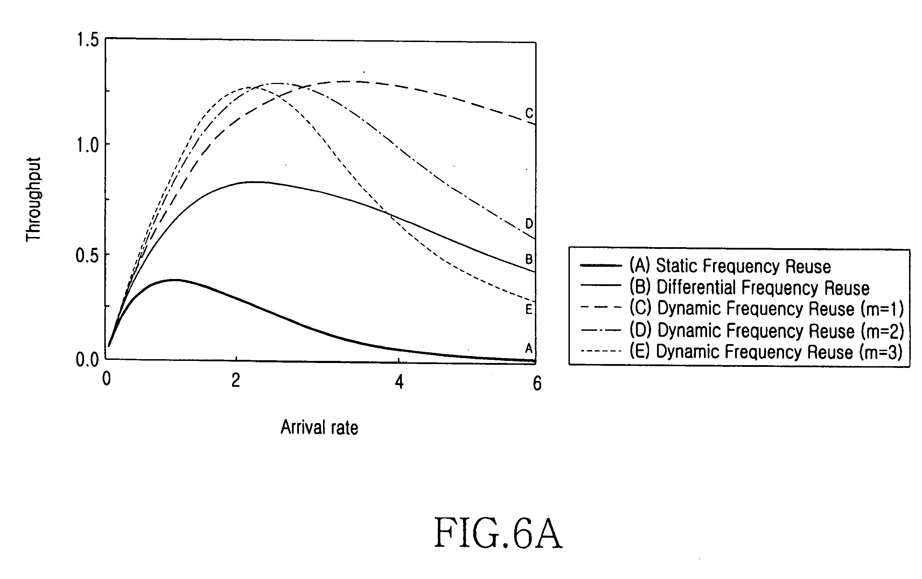

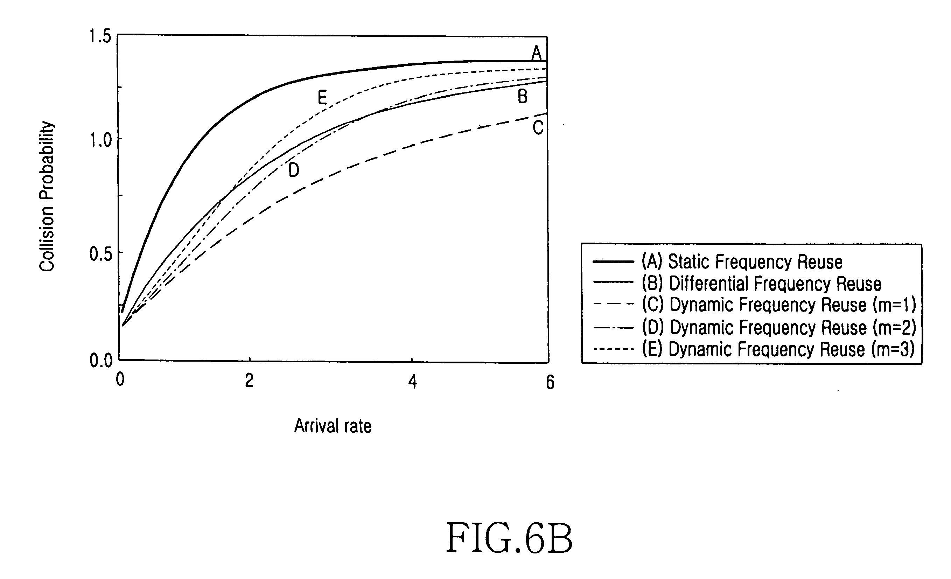

FIGs. 6A and 6B are illustrative diagrams of experimental results performed in multiple cells based on the random access method in the multi-cell OFDMA network according to the preferred embodiment of the present invention.

FIG 6A is an illustrative diagram of throughputs in multiple cells to which the random access method in the multi-cell OFDMA network according to the preferred embodiment of the present invention is applied. FIG 6B is an illustrative diagram of collision probabilities in multiple cells to which the random access method in the multi-cell OFDMA network according to the preferred embodiment of the present invention is applied.

The horizontal axis of FIG 6A indicates an arrival rate, and the vertical axis indicates a throughput. The horizontal axis of FIG. 6B indicates an arrival rate, and the vertical axis indicates a collision probability. FIGs. 6A and 6B show Poisson distribution charts in which total packets have arrival rates of 0 to 10 in a state of seven random access channels having different subcarriers in multiple cells to which the random access method in the multi-cell OFDMA network according to the preferred embodiment of the present invention is applied.

Referring to FIGs. 6A and 6B, A indicates a case of static frequency reuse according to a case where one channel is assigned to each cell, i.e., a frequency reuse rate is 7, while B indicates a case of differential frequency reuse according to a case where three frequencies are allocated to every cell so that one frequency overlaps in two arbitrary cells. Also, C to E indicate cases of dynamic frequency reuse according to the preferred embodiment of the present invention in which every call can use seven frequencies.

Upon analysis of FIGs. 6A and 6B, it can be recognized that the suggested method, the dynamic frequency reuse, has the best performance. That is, like the experiments in the single cell, the collision probability increases along with an increase of value of *m*, while points indicating an optimal throughput separately exist based on the arrival rate. That is, a case of *m* =3 is optimal at the arrival rate of under 2, a case of *m* =2 is optimal at the arrival rate of 2 to 3, and a case of *m* =1 is optimal at the arrival rate of over 3.

As described above, according to an embodiment of the present invention, a system can use the same random access channels without separately distributing the random access channels to cells, by setting a resource reuse rate of the random access channels to 1.

In addition, in a case of a random access failure, a quick access can be achieved by changing a channel based on a link usage rate without waiting for an arbitrary time.

The method of the present invention can be embodied as a program and stored in computer-readable media (e.g., CD-ROMs, random access memories (RAMs), floppy disks, hard disks, optical magnetic disks, etc.)

## Claims

1. A random access method in an Orthogonal Frequency Division Multiple Access, OFDMA, network, the method **characterized in that** it comprises the steps of:
(1) randomly selecting, by a subscriber device, one of a plurality of uplink random access channels (302), when a random access request to the OFDMA network is transmitted by the subscriber device;
(2) obtaining access (307), by the subscriber device, through the selected channel if a collision has not occurred in the selected uplink random access channel;
(3) randomly selecting one of the plurality of uplink random access channels and determining whether another collision has occurred, if a collision has occurred in the selected uplink random access channel and if the number of retries for channel selection is less than a predetermined threshold value (303, 304, 305);
(4) obtaining access through a finally selected channel, if it is determined in step (3) that a collision has not occurred (307); and
(5) repeating step (3), if it is determined in step (3) that a collision has occurred.

2. The method of claim 1, further comprising the steps of:
backlogging (306), for a random time, each collided subscriber device, if the number of retries for channel selection is greater than the predetermined threshold value; and
repeating step (1).

3. The method of claims 1 or 2, wherein the collision (303) indicates that a collided subscriber device has failed an access to one of the uplink random access channels.

4. The method of claim 3, wherein for the uplink random access channels, a reuse rate is 1 by using the same channel resources without separately allocating the uplink random access channels to every cell in a multi-cell area of the OFDMA network.

5. The method of one of claims 1 to 4, wherein the predetermined threshold value is determined by estimating a packet total arrival rate R of the OFDMA network.

6. The method of claim 5, wherein the estimation of the packet total arrival rate is obtained by summing up a total number of random accesses attempted by all subscribers in a single superframe.

7. The method of claim 2, wherein the collision indicates that a collided subscriber device has failed an access to one of the uplink random access channels.

## Patentansprüche

1. Direktzugriffsverfahren in einem OFDMA-Netzwerk (Orthogonal Frequency Division Multiple Access network), das Verfahren ist **dadurch gekennzeichnet, dass** es die folgenden Schritte umfasst:
(1) zufallsbestimmtes Auswählen eines einer Vielzahl von Uplink-Direktzugriffskanälen (303) durch eine Teilnehmervorrichtung, wenn eine Direktzugriffsanforderung durch die Teilnehmervorrichtung zu dem OFDMA-Netzwerk gesendet wird,
(2) Erhalten von Zugriff (307) durch die Teilnehmervorrichtung, durch den ausgewählten Kanal, wenn in dem ausgewählten Uplink-Direktzugriffskanal keine Kollision stattgefunden hat,
(3) zufallsbestimmtes Auswählen eines von der Vielzahl von Uplink-Direktzugriffskanälen und Feststellen, ob eine weitere Kollision stattgefunden hat, wenn in dem ausgewählten Uplink-Direktzugriffskanal eine Kollision stattgefunden hat und wenn die Anzahl von Wiederholungen für die Kanalauswahl kleiner ist als ein vorgegebener Grenzwert (303, 304, 305),
(4) Erhalten von Zugriff durch einen schließlich ausgewählten Kanal, wenn in dem Schritt (3) festgestellt ist, dass keine Kollision stattgefunden hat (307), und
(5) Wiederholen von Schritt (3), wenn in Schritt (3) festgestellt ist, dass eine Kollision stattgefunden hat.

2. Verfahren nach Anspruch 1, das des Weiteren die folgenden Schritte umfasst:
Backlogging (306) jeder kollidierten Teilnehmervorrichtung für eine zufällige Zeitdauer, wenn die Anzahl von Wiederholungen für Kanalauswahl größer als der vorgegebene Grenzwert ist, und
Wiederholen von Schritt (1).

3. Verfahren nach Anspruch 1 oder 2, wobei die Kollision (303) anzeigt, dass eine kollidierte Teilnehmervorrichtung einen Zugriff auf einen der Uplink-Direktzugriffskanäle verfehlt hat.

4. Verfahren nach Anspruch 3, wobei für die Uplink-Direktzugriffskanäle eine Wiederbenutzungsrate 1 ist, indem dieselben Kanalressourcen, ohne getrenntes Zuweisen der Uplink-Direktzugriffskanäle zu jeder Zelle in einem Multizellenbereich des OFDMA-Netzwerks, genutzt werden.

5. Verfahren nach einem der Ansprüche 1 bis 4, wobei der vorgegebene Grenzwert bestimmt wird, indem eine Paket-Gesamteingangsrate R des OFDMA-Netzwerks geschätzt wird.

6. Verfahren nach Anspruch 5, wobei die Schätzung der Paket-Gesamteingangsrate durch Zusammenfassen einer Gesamtanzahl von durch alle Teilnehmer versuchten Direktzugriffen in einem Superframe erhalten wird.

7. Verfahren nach Anspruch 2, wobei die Kollision anzeigt, dass ein kollidierter Teilnehmer einen Zugriff auf einen der Uplink-Direktzugriffskanäle verfehlt hat.

## Revendications

1. Procédé d'accès aléatoire dans un réseau à Accès Multiple par Répartition en Fréquence Orthogonale, OFDMA (Orthogonal Frequency Division Multiple Access), le procédé étant **caractérisé en ce qu'**il comprend les étapes consistant à :
(1) sélectionner de façon aléatoire, par un dispositif d'abonné, l'un d'une multiplicité de canaux d'accès aléatoire de liaison montante (302), lorsqu'une demande d'accès aléatoire adressée au réseau OFDMA est émise par le dispositif d'abonné;
(2) obtenir l'accès (307), par le dispositif d'abonné, à travers le canal sélectionné, si une collision ne s'est pas produite dans le canal d'accès aléatoire de liaison montante sélectionné;
(3) sélectionner de façon aléatoire un de la multiplicité de canaux d'accès aléatoire de liaison montante, et déterminer si une autre collision s'est produite, si une collision s'est produite dans le canal d'accès aléatoire de liaison montante sélectionné, et si le nombre de nouvelles tentatives de sélection de canal est inférieur à une valeur de seuil prédéterminée (303, 304, 305) ;
(4) obtenir l'accès à travers un canal sélectionné finalement, s'il est déterminé à l'étape (3) qu'une collision ne s'est pas produite (307); et
(5) répéter l'étape (3), s'il est déterminé à l'étape (3) qu'une collision s'est produite.

2. Procédé selon la revendication 1, comprenant en outre les étapes consistant à :
mettre en attente (306), pendant une durée aléatoire, chaque dispositif d'abonné donnant lieu à collision, si le nombre de nouvelles tentatives de sélection de canal est plus grand que la valeur de seuil prédéterminée; et
répéter l'étape (1).

3. Procédé selon les revendications 1 ou 2, dans lequel la collision (303) indique qu'un dispositif d'abonné donnant lieu à collision a échoué dans une tentative d'accès à l'un des canaux d'accès aléatoire de liaison montante.

4. Procédé selon la revendication 3, dans lequel pour les canaux d'accès aléatoire de liaison montante, un taux de réutilisation est fixé à 1 en utilisant les mêmes ressources de canal, sans allouer séparément les canaux d'accès aléatoire de liaison montante à chaque cellule dans une zone multicellulaire du réseau OFDMA.

5. Procédé selon l'une des revendications 1 à 4, dans lequel la valeur de seuil prédéterminée est déterminée en estimant un débit d'arrivée de paquets total, R, du réseau OFDMA.

6. Procédé selon la revendication 5, dans lequel l'estimation du débit d'arrivée de paquets total est obtenue en faisant la somme d'un nombre total d'accès aléatoires tentés par tous les abonnés dans une seule super-trame.

7. Procédé selon la revendication 2, dans lequel la collision indique qu'un dispositif d'abonné donnant lieu à collision a échoué dans une tentative d'accès à l'un des canaux d'accès aléatoire de liaison montante.
